# EUROPEAN PATENT APPLICATION

(11) **EP 1 500 463 A2**
(43) Date of publication of application: **26.01.2005**
(21) Application number: 04405472.4
(22) Date of filing: 22.07.2004
(51) Int. Cl.: B23Q 11/10, B23Q 9/00

(54) **Power tool work table**

(30) Priority: 23.07.2003 US 625180; 22.07.2004 US
(71) Applicant: Zhang, Charlie, Oak Brook, IL 60523 (US)
(72) Inventor: Zhang, Charlie, Oak Brook, IL 60523 (US)
(74) Representative: Patentanwälte Feldmann & Partner AG

(57) **Abstract**

A work table (10) including a water tray defining a reservoir (90), and forming a ridge at least partially positioned within the reservoir and extending along a length of the water tray. A planar member (20) having a work surface is positionable with respect to the water tray, and forms a channel (80) extending through the work surface. The channel (80) is aligned with the ridge and in fluid communication with the reservoir (90) with the planar member (20) positioned on the water tray.

## Description

### BACKGROUND OF THE INVENTION

### Field of the Invention

This invention relates to a work table for using a power tool, such as a tile saw.

### Description of Related Art

Work tables are useful on j ob sites requiring portable work surfaces for cutting, machining and otherwise processing construction materials. Existing work tables are typically limited in size by weight and portability considerations.

One example of existing work tables are tables having an overhead bar under which a power tool travels to effect a straight path for cutting, grinding, etc. This arrangement results in a heavy table with a limited cutting path.

### SUMMARY OF THE INVENTION

It is one obj ect of this invention to provide a work table that is lightweight and portable yet still includes a significant work surface.

It is another object of this invention to provide a work table that can provide a steady supply of water or similar coolant to a power tool.

It is yet another object of this invention to provide a work table that has a compact footprint yet provides an expansive work surface.

The above and other objects of this invention can be attained through a work table including a water tray that forms or defines a reservoir extending across at least a portion of a width of a bottom surface of the water tray. The reservoir preferably has a first depth at a first end portion of the water tray different from a second depth at a second end portion of the water tray. In one preferred embodiment of this invention, the reservoir has a first depth at a first end portion of the water tray and a second depth at a second end portion of the water tray, wherein the second depth is greater than the first depth. The water tray preferably forms or includes an opening at the second end portion normally obstructed by a plug.

A ridge is formed by or connected to the water tray. For example, the ridge can be mounted to or integrated with a bottom surface of the water tray. Preferably, the ridge is at least partially positioned within the reservoir and extends along a length of the water tray. In one preferred embodiment of this invention, the ridge is positioned along a longitudinal centerline of the water tray. The ridge includes opposing side walls, which transition into the water tray bottom surface, such as at an obtuse angle with respect to the bottom surface.

The work table further includes a planar member positionable with respect to the water tray. The planar member has a generally flat work surface preferably configured to accommodate materials for cutting, grinding, sanding, etc. Preferably, the planar member is positionable within the water tray, with a perimeter edge portion of the water tray flush with the work surface. The planar member forms a channel that extends through the work surface. The channel is preferably aligned with the ridge and in fluid communication with the reservoir, when the planar member is positioned on the water tray.

In one preferred embodiment of this invention, the work table includes two generally parallel bars extending along a length of the work surface, with the channel preferably positioned between the two parallel bars. A sleeve is slidably positioned about each of the two generally parallel bars. A power tool, such as a tile saw, having a blade portion that extends into the channel is connected between the two sleeves. The power tool is slidable along a length of the parallel bars so that the power tool blade portion extends into a cutting fluid contained within the channel, as the power tool slides along the parallel bars, The work table may further include retractable or folding legs positioned below the work surface.

### BRIEF DESCRIPTION OF THE DRAWINGS

The above-mentioned and other features and objects of this invention will be better understood from the following detailed description taken in conjunction with the drawings wherein:
Fig. 1 is a top perspective view of a work table wherein a pair of handles are in a retracted position according to one preferred embodiment of this invention;
Fig. 2 is a top perspective view of the work table shown in Fig, 1 wherein a pair of handles are in an extended position according to one preferred embodiment of this invention;
Fig. 3 is a bottom perspective view of the work table shown in Fig. 1 according to one preferred embodiment of this invention;
Fig. 4 is a front perspective view of a power tool on a work table according to one preferred embodiment of this invention;
Fig. 5 is a back perspective view of a power tool on a work table according to one preferred embodiment of this invention;
Fig. 6 is a side view of a work table according to one preferred embodiment of this invention; and
Fig. 7 is a top perspective view of a water tray according to one preferred embodiment of this invention.

### DESCRIPTION OF PREFERRED EMBODIMENTS

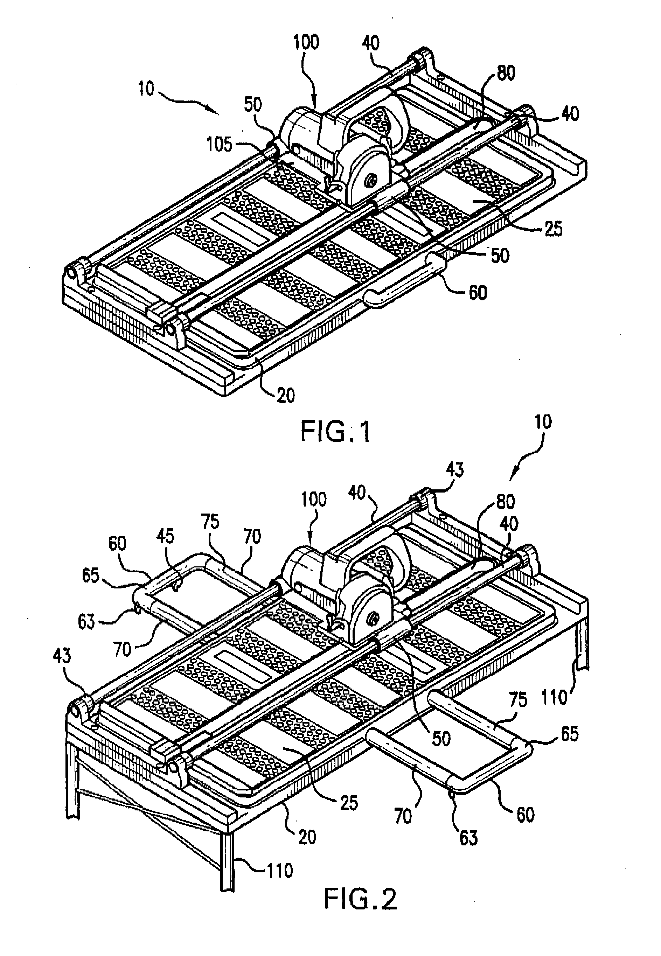

Figs. 1-5 show a work table 10 according to one preferred embodiment of this invention.

Work table 10 preferably includes a planar member 20 having a generally flat work surface 25 and an opposed lower surface 30. Work surface 25 is preferably configured to accommodate materials for cutting, grinding, sanding, etc. As such, work surface 25 may include an integrated grid spaced at desired units of measure.

As shown in Figs. 1 and 2, two generally parallel bars 40 extend across or along a length of work surface 25. According to one preferred embodiment of this invention bars 40 are constructed of aluminum or other suitable strong, lightweight material. Bars 40 preferably extend longitudinally across work surface 25 and preferably include bumpers 43 at each end to dampen impact of a power tool against each end of bar 40.

Further, work table 10 preferably includes sleeve 50 slidably connected around each bar 40. Sleeves 50 preferably comprise a bushing, a bearing or similar arrangement that permits free and uniform motion across the two generally parallel bars 40. Sleeves 50 are preferably aligned with respect to each other along bars 40.

Power tool 100 and/or mounting bracket 105 is connected between the two sleeves 50. Mounting bracket 105 may be a universal bracket that includes hardware for securing power tool 100. Alternatively, power tool 100 may be permanently or removably affixed between the two sleeves 50 so that power tool 100 slides along bars 40 in a fluid, linear path across work surface 25.

As shown in Figs, 1 and 2, handle 60 is positioned in a side of planar member 20. More specifically, handle 60 is positioned in each side of planar member 20 such that each handle 60 is extendible perpendicular from planar member 20, Handle 60 is thus moveable between a retracted position within planar member 20 and an extended position away from planar member 20. Handle 60 preferably includes fastener 63 or a similar device for maintaining handle 60 in the retracted position. Alternatively, telescoping rods 70 may include a detente or other stop to prevent extension of telescoping rods 70 without an additional force applied to handle 60.

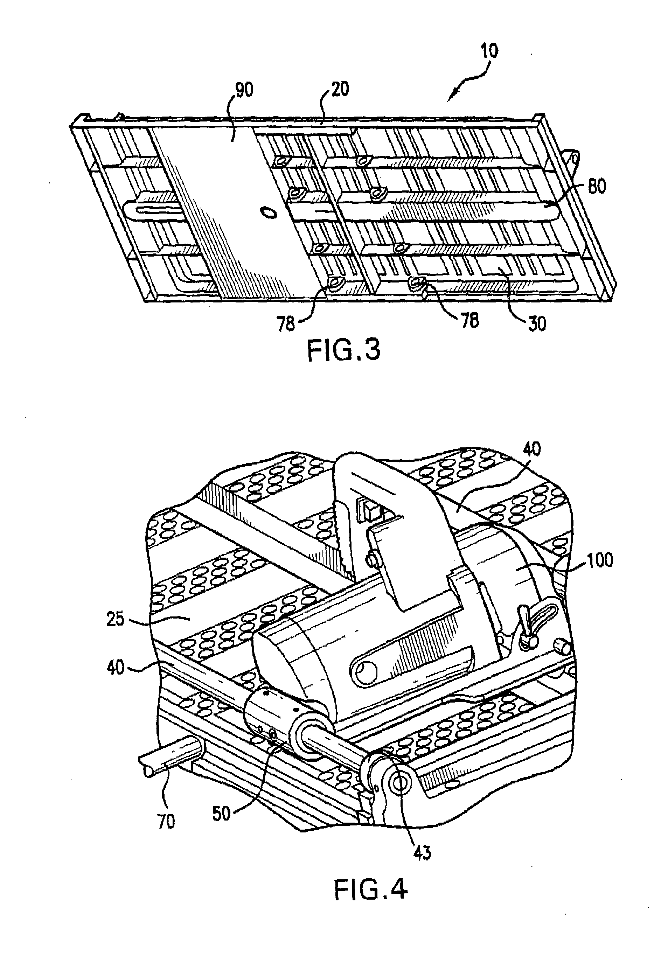

In the extended position, handle 60 includes top edge 65 that is generally flush with work surface 25. In addition, one or more telescoping rods 70 preferably connect handle 60 to planar member 20. Accordingly, each telescoping rod 70 includes top edge 75 that is generally flush with work surface 25 and top edge 65 ofhandle 60. As partially shown in Fig. 3, telescoping rods 70 may slide through apertures 78 machined into lower surface 30 ofplanar member 20.

According to one preferred embodiment of this invention, in the extended position, each handle 60 is spaced at least approximately 20% of a width of work surface 25 away from work surface 25. As such, at least approximately 40% work area is added to work surface 25 by virtue of the extended handles 60. This additional work area facilitates support of large workpieces, such as tile or lumber, that require cutting or other working by power tool 100.

Handle 60 is preferably rigi dly fixed in a position generally co-planar with work surface 25 and is not hinged to a side of planar member 20, Such arrangement enables handle 60 to support workpieces on work table 10 and adds to the usable work area on work table 10.

According to one preferred embodiment ofthis invention, latch 45 is positioned on a side of work surface 25 and is attachable to one sleeve 50. Latch 45, when in a latched position, thereby prevents movement of sleeve 50 relative to bar 40 and thus prevents movement of power tool 100 when work table 10 is in transit. According to one preferred embodiment of this invention, latch 45 extends from handle 60 or from nearby handle 60 thereby concentrating weight of power tool 100 immediately below handle 60 to optimize the dynamics ofmoving work table 10. According to one preferred embodiment of this invention, latch 45 and fastener 63 may be the same assembly or operate in concert with each other.

Figs. 1 and 2 further show one embodiment of the subject invention having channel 80 extending into and through work surface 25 between the two generally parallel bars 40. Channel 80 is preferably filled with water or similar coolant/liquid and accommodates a blade or other element of power tool 100. For instance, in an arrangement of work table 10 used in connection with a tile saw, the tile saw includes a blade that extends into channel 80 and thus water, thereby maintaining an effective cut across each piece of tile.

According to one preferred embodiment of this invention best shown in Fig, 3, reservoir 90 is positioned along lower surface 30 beneath work surface 25 and in fluid communication with channel 80. Reservoir 90 is preferably machined into lower surface 30 or removably attached to lower surface 30 to facilitate cleaning, adjustment and/or replacement. Reservoir 90 accommodates an additional supply of water or similar coolant/liquid and provides channel 80 with additional water should power tool 100 use an existing supply within channel 80 during operation. According to one preferred embodiment of this invention, reservoir 90 is positioned perpendicular to channel 80 such that reservoir 90 overlaps a length of channel 80 thereby providing channel 80 with an adequate reserve of coolant/liquid. As such, reservoir 90 extends across a width of lower surface 30.

According to one preferred embodiment of this invention, reservoir 90 maybe closed or otherwise sealed to enable transit of work table 10 without spilling water or other coolant/fluid. Reservoir 90 may be removed and sealed or otherwise sealed while in position along lower surface 30 of work table 10.

According to one preferred embodiment of this invention, work table 10 includes folding legs 110 positioned along lower surface 30 opposite work surface 25. Legs 110 are preferably lightweight and foldable and provide adequate support for typical loads to be encountered on work table 10.

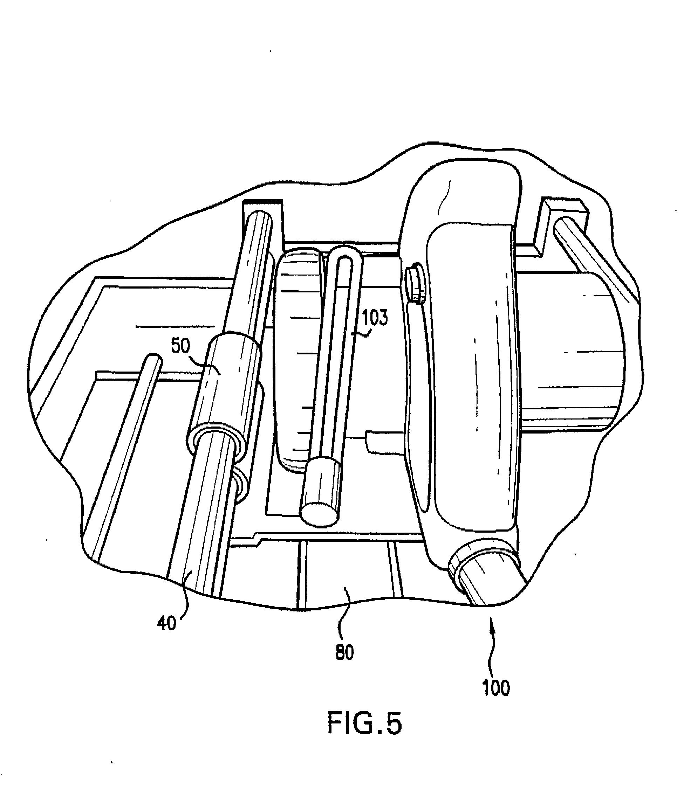

In one preferred embodiment of this invention, work table 10 is used in connection with a tile saw, The tile saw preferably includes a blade extending into channel 80. Large pieces of tile are accommodated by work table 10 when handles 60 are in the extended position. Power tool 100 may alternatively be a profile wheel, stone saw, circular saw, edge grinder or similar tool that requires a sufficient work surface 25. As shown in Fig. 5, power tool 100 may be a tile saw having an adjustable saw guide 103 with a slot that follows a contour of the tile saw motor.

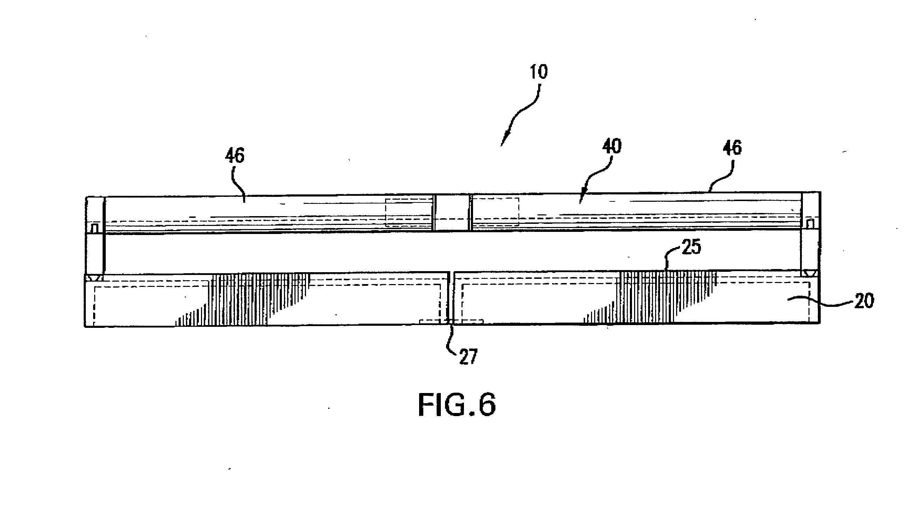

Fig. 6 shows an additional preferred embodiment of the subject invention wherein bars 40 are collapsible into two or more pieces 46. In addition, work surface 25 may include hinge 27 to fold work table 10 in half. Preferably, work table 10 when folded may accommodate the two or more pieces 46 of bars 40 so that work table 10 is compact and portable to and from a job site.

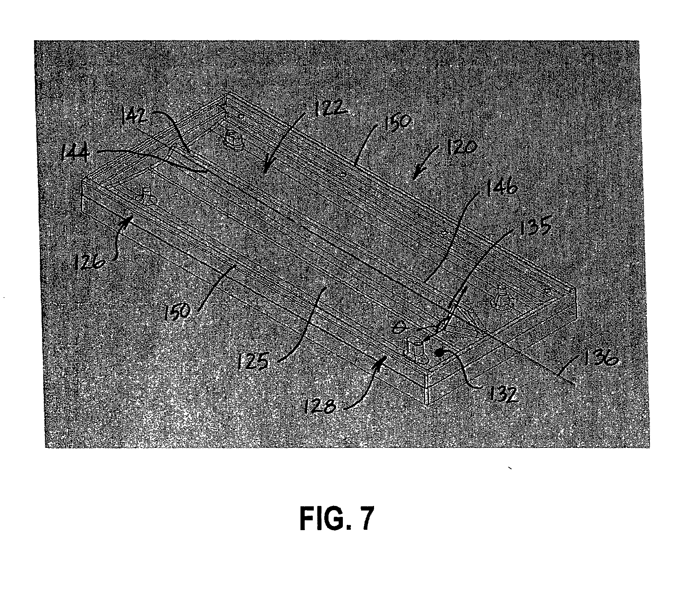

Fig. 7 shows a work table 10 according to one preferred embodiment of this invention. Referring further to Fig. 7, work table 10 includes a water tray 120 positionable with respect to work surface 25. Water tray 120 forms or defines a reservoir 122, which contains a cutting/coolant fluid, such as water. Reservoir 122 also contains or holds material dust, pieces or debris that are removed and/or collected during operation of the power tool positioned on work table 10, for example as the work piece or material is cut or shaped, as desired.

Preferably, reservoir 122 extends across at least aportion ofa width of a bottom surface 125 of water tray 120. As shown in Fig. 7, reservoir 122 has a first depth at a first end portion 126 of water tray 120 and a second depth at a second end portion 128 of water tray 120 different than the first depth. For example, in one preferred embodiment of this invention, the second depth at second end portion 128 is greater than the first depth at first end portion 126. Preferably, but not necessarily, water tray 120 forms or includes an opening through bottom surface 125 at second end portion 128. The opening is normally covered or obstructed by a plug 132, to prevent the cutting/coolant fluid from exiting reservoir 122 through the opening during use. During operation of a power tool connected to work table 10, material dust or pieces, as well as debris, collected within reservoir 122 flow or move towards the deeper second end portion 128. The collected material dust, pieces and/or debris can easily be removed from water tray 120 by removing plug 132, which normally covers or obstructs the opening, and allowing the water or cutting/coolant fluid, including the collected materials, to flow from reservoir 122 through the opening.

A ridge 135 is formed by or connected to water tray 120. Preferably, ridge 135 is integrated with bottom surface 125, as shown in Fig. 7. Ridge 135 is at least partially positioned within reservoir 122 and preferably extends along a length of water tray 120, for example along a longitudinal centerline 136 of water tray 120. Ridge 135 includes a top surface 142 and opposing side walls 144 and 146. Each side wall 144, 146 transitions into water tray bottom surface 125 at an angle, θ, with respect to the bottom surface. Preferably, angle θ is an obtuse angle, i.e., greater than 90°, as shown in Fig. 7. Because opposing side walls 144,146 slope away from top surface 142 towards bottom surface 125 of water tray 120, material dust or pieces produced during operation of the power tool 100 move away from a cutting area and are collected within reservoir 122, thus preventing accumulation or collection of material dust or pieces at the cutting area, for example at top surface 142 and/or within channel 80.

According to one preferred embodiment of this invention, planar member 20 having work surface 25 is positionable with respect to water tray 120. Preferably, planar member 20 is hingedly or pivotally attached or connected to water tray 120 to allow access to reservoir 122, Any suitable mechanical connection element, such as at least one hinge, which allows planar member 20 and/or work surface 25 to pivot with respect to water tray 120 and/or reservoir 122 can be used to attach or connect planar member 20 with respect to water tray 120. Channel 80 formed by planar member 20 and extending through work surface 25 is preferably aligned with ridge 125 and in fluid communication with reservoir 122, when planar member 20 is positioned on water tray 120. Referring to Figs. 1 and 7, planar member 20 is preferably positionable within water tray 120 so that a perimeter edge portion 150 of water tray 120 is flush with work surface 25, With planar member 20 positioned within water tray 120, a water level within channel 80 can be increased, if desired.

As shown in Fig. 1, work table 10 includes two generally parallel bars 40 extending along a length of work surface 25. One sleeve 50 is slidably connected to each bar 40, such as being positioned around bar 40. Power tool 100, such as a tile saw, is connected between the two sleeves 50, and a blade portion of the tile saw extends into channel 80. Preferably, channel 80 is positioned between parallel bars 40, as shown in Fig. 1. Work table 10 may also include legs positioned below the work surface, which are retractable or foldable for easily transporting and/or storing of work table 10.

Thus, the present invention provides a work table having a planar member including a generally planar work surface. The work table includes two generally parallel bars extending along a length ofthe work surface. A channel extends through the work surface and along a length of the work surface between the two generally parallel bars. A water tray is positioned with respect to the work surface. Preferably, the planar member is positionable within the water tray with a perimeter edge portion of the water tray flush with the work surface. The water tray forms or defines a reservoir. Preferably, the reservoir has a first depth at a first end portion of the water tray different from a second depth at a second end portion of the water tray, For example, the second depth may be greater than the first depth. An opening is preferably formed at the second end portion and is normally covered or obstructed by a plug.

A ridge extends from a bottom surface of the water tray, and is at least partially positioned within the reservoir. In one preferred embodiment of this invention, the ridge extends along a longitudinal centerline of the water tray, and with the planar member positioned on the water tray, the channel is aligned with the ridge and in fluid communication with the reservoir. Preferably, the ridge further includes opposing side walls, which transition into the water tray bottom surface at an obtuse angle with respect to the bottom surface.

A power tool, such as a tile saw, having a blade is slidable along a length of the two generally parallel bars so that the blade extends into a cutting fluid contained within the channel as the power tool slides along the length of each of the two generally parallel bars.

While in the foregoing specification this invention has been described in relation to certain preferred embodiments thereof, and many details have been set forth for purpose of illustration, it will be apparent to those skilled in the art that the work table according to this invention is susceptible to additional embodiments and that certain of the details described herein can be varied considerably without departing from the basic principles of the invention.

## Claims

1. A work table comprising:
a water tray defining a reservoir, and forming a ridge at least partially positioned within the reservoir and extending along a length of the water tray; and
a planar member having a work surface positionable with respect to the water tray, the planar member forming a channel extending through the work surface, the channel aligned with the ridge and in fluid communication with the reservoir with the planar member positioned on the water tray.

2. The work table of Claim 1 wherein the ridge is positioned along a longitudinal centerline of the water tray.

3. The work table of Claim 1 wherein the reservoir has a first depth at a first end portion of the water tray and a second depth at a second end portion of the water tray different than the first depth.

4. The work table of Claim 1 wherein the ridge further comprises opposing side walls, each of the opposing side walls transitioning into a bottom surface of the water tray.

5. The work table of Claim 1 wherein each side wall transitions into the bottom surface at an obtuse angle with respect to the bottom surface.

6. , The work table of Claim 1 wherein the planar member is positionable within the water tray, a perimeter edge portion of the water tray flush with the work surface.

7. The work table of Claim 1 further comprising:
two generally parallel bars extending along a length of the work surface;
two sleeves slidably connected to the two generally parallel bars, each sleeve of the two sleeves positioned around one bar of the two generally parallel bars; and
a power tool connected between the two sleeves.

8. , The work table of Claim 7 wherein the channel is positioned between the two generally parallel bars,

9. , The work table of Claim 7 wherein the power tool comprises a tile saw, the tile saw having a blade extending into the channel.

10. The work table of Claim 1 further comprising;
folding legs positioned below the work surface.

11. The work table of Claim 1 wherein the planar member is hingedly connected to the water tray,

12. A work table comprising:
a water tray having a first end portion and a second end portion, the water tray defining a reservoir having a first depth at the first end portion different than a second depth at the second end portion;
a ridge connected to a bottom surface of the water tray, the ridge at least partially positioned within the reservoir and along a longitudinal centerline of the water tray; and
a planar member having a work surface, and forming a channel extending through the work surface, the planar member hingedly connected to the water tray with the channel aligned with the ridge and in fluid communication with the reservoir.

13. The work table of Claim 12 wherein the ridge further comprises opposing side walls, each of the opposing side walls transitioning into the bottom surface of the water tray

14. The work table of Claim 12 wherein each side wall transitions into the bottom surface at an obtuse angle with respect to the bottom surface.

15. The work table of Claim 12 wherein the ridge is integrated with the water tray.

16. The work table of Claim 12 wherein the reservoir extends across at least a portion of a width of the bottom surface.

17. The work table of Claim 12 wherein the planar member is positionable within the water tray, a perimeter edge portion of the water tray flush with the work surface.

18. The work table of Claim 12 further comprising:
two generally parallel bars extending along a length of the work surface;
two sleeves slidably connected to the two generally parallel bars, each sleeve of the two sleeves positioned around one bar of the two generally parallel bars; and
a power tool connected between the two sleeves.

19. The work table of Claim 18 wherein the power tool comprises a saw having a blade portion extending into the channel.

20. A work table having a generally planar work surface, the work table comprising:
two generally parallel bars extending along a length of the work surface;
a channel extending through the work surface and between the two generally parallel bars;
a water tray defining a reservoir positioned below the work surface, and farming a ridge extending from a bottom surface of the water tray, the ridge at least partially positioned within the reservoir and along a longitudinal centerline of the water tray, the work surface positionable with respect to the water tray with the channel aligned with the ridge and in fluid communication with the reservoir; and
a power tool having a blade, the power tool slidable along a length of each of the two generally parallel bars so that the blade extends into a cutting fluid within the channel as the power tool slides along the length of each of the two generally parallel bars.

21. The work table of Claim 20 wherein the planar member is positionable within the water tray, a perimeter edge portion of the water tray flush with the work surface.

22. The work table of Claim 20 wherein the reservoir extends across a width of a bottom surface of the water tray.

23. The work table of Claim 20 wherein the reservoir has a first depth at a first end portion of the water tray and a second depth at a second end portion of the water tray different than the first depth.

24. The work table of Claim 23 wherein the second depth is greater than the first depth, the water tray forming an opening at the second end portion normally obstructed by a plug.

25. The work table of Claim 20 further comprising:
a connection element hingedly connecting the work surface to the water tray.
